# EUROPEAN PATENT APPLICATION

(11) **EP 4 664 638 A1**
(43) Date of publication of application: **17.12.2025**
(21) Application number: 24862967.7
(22) Date of filing: 17.06.2024
(51) Int. Cl.: H01M 50/251, H01M 50/317, H01M 10/6552, H01M 10/613, H01M 10/663, B65D 88/02, B65D 88/74

(54) **CONTAINER MODULE**

(30) Priority: 07.09.2023 KR 20230119309; 14.12.2023 KR 20230182298
(71) Applicant: LG Energy Solution, Ltd., Seoul 07335 (KR)
(72) Inventor: KANG, Min-Seok, Daejeon 34122 (KR); SON, Min-Soo, Daejeon 34122 (KR); YU, Sang-Hyun, Daejeon 34122 (KR); LEE, Jeong-Won, Daejeon 34122 (KR); JO, Sang-Hyun, Daejeon 34122 (KR)
(74) Representative: BCKIP Part mbB
(86) International application number: PCT/KR2024/008334
(87) International publication number: WO 2025/053384

(57) **Abstract**

A container module is disclosed. The container module according to an embodiment of the present disclosure includes a base frame having a square or rectangular shape; a corner column extended in a top-bottom direction, and connected to a corner of the base frame; a bracket coupled to the corner column, and extended in a front-rear direction; and a battery pack installed on the bracket.

## Description

### TECHNICAL FIELD

The present disclosure relates to a container module.

The present application claims priority to Korean Patent Application No. 10-2023-0119309 filed on September 7, 2023 and Korean Patent Application No. 10-2023-0182298 filed on December 14, 2023 in the Republic of Korea, the disclosures of which are incorporated herein by reference.

### BACKGROUND

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Recently, with the emerging issues such as a lack of power or eco-friendly energy, Energy Storage Systems (ESS) used to store power for later use are gaining more attention. For example, one of proposed methods for controlling power supply is smart grid systems. The power usage is not constant and can change at any time. Typically, the power usage sharply increases in the summer daytime due to the use of cooling devices and sharply decreases in the nighttime. From the perspective of power consumption, power consumption is not constant and may frequently change, but from the perspective of power supply, the amount of power produced can be controlled to some extent, but in reality, it is difficult to meet the amount of power required. Accordingly, power oversupply or power shortage may occur due to the inequality in power supply and power consumption, and to solve this problem, the smart grid systems may flexibly store and control power. The concept of smart grid systems is that power is stored in times or regions in which surplus power occurs and the stored power is supplied in times and regions in which power shortage occurs. One of the essential elements for building the smart grid systems may be energy storage systems for storing power. More recently, with the widespread use of electric vehicles, energy storage systems may be used in facilities for charging the electric vehicles, for example, charging stations.

The energy storage system may include a plurality of battery containers. The number of battery containers and their placement may vary depending on different environments and requirements. To meet the requirements, there is a growing need for a battery container made up of a combination of small modules to improve energy density and change to many different shapes and forms.

### SUMMARY

### Technical Problem

An object of the present disclosure is to solve these and other problems.

Another object of the present disclosure is to provide a container module with improved assembly efficiency.

Still another object of the present disclosure is to provide a container module of simple structure.

Yet another object of the present disclosure is to provide a container module of smaller size.

### Technical Solution

To achieve the above-described objects, a container module according to an embodiment of the present disclosure includes a base frame having a square or rectangular shape; a corner column extended in a top-bottom direction, and connected to a corner of the base frame; a bracket coupled to the corner column, and extended in a front-rear direction; and a battery pack installed on the bracket.

Additionally, the container module may further include a top frame located on the base frame, and having a square or rectangular shape, and the corner column may be connected to the corner of the top frame.

Additionally, the corner column may be exposed to outside.

Additionally, the container module may further include a fastening member configured to fasten the corner column to the bracket.

Additionally, the base frame may include a horizontal beam connected to the corner, and the container module may further include a side column connected in the top-bottom direction, and connected to the horizontal beam.

Additionally, the bracket may be coupled to the side column.

Additionally, the container module may further include a side panel extended in the top-bottom direction, and configured to cover the side column, and the side column may support the side panel.

Additionally, the container module may further include a center column extended in the top-bottom direction, and located at a center of a width of the base frame in the left-right direction, and the battery pack may be located between the corner column and the center column.

Additionally, the battery pack may be a first battery pack, the container module may further include a second battery pack arranged in the left-right direction with the first battery pack, and the center column may be located between the first battery pack and the second battery pack.

Additionally, the container module may further include a main pipe extended in the top-bottom direction and located between the first battery pack and the second battery pack, and having a flow channel.

Additionally, the main pipe may be in communication with the first battery pack and the second battery pack.

Additionally, the container module may further include a front panel configured to be open and closed; and a cooling portion disposed in the front panel, and the main pipe may be in communication with the cooling portion.

Additionally, the container module may further include a top panel coupled to the top frame; and a venting portion disposed in the top panel.

Additionally, the venting portion may be configured to bring inside and outside of the top panel into communication with each other when a thermal event occurs.

A container system according to an aspect of the present disclosure includes the container module of the present disclosure.

Additionally, the container system may include a plurality of container modules.

Additionally, the plurality of container modules may be coupled in the left-right direction.

Additionally, the container system may further include a control module coupled to a side of the container module.

An energy storage system according to an aspect of the present disclosure includes the container module of the present disclosure.

### Advantageous Effects

According to at least one of the embodiments of the present disclosure, it may be possible to improve energy density of the container module.

According to at least one of the embodiments of the present disclosure, it may be possible to simplify the structure of the container module.

According to at least one of the embodiments of the present disclosure, it may be possible to reduce the size of the container module.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a diagram showing a container module according to an embodiment of the present disclosure.
FIG. 2 is an exploded view of frames and columns of FIG. 1.
FIG. 3 is an assembled diagram of the frames and the columns of FIG. 2.
FIG. 4 is a diagram showing brackets installed at the columns of FIG. 3.
FIG. 5 is a diagram showing panels installed at the frames and the columns of FIG. 4.
FIG. 6 is a diagram showing an open front panel of the container module of FIG. 1.
FIG. 7 is a cross-sectional view of FIG. 6, taken along the line A-A'.
FIG. 8 is an enlarged view of section L in FIG. 7.
FIG. 9 is a cross-sectional view of FIG. 8, taken along the line M-M'.
FIG. 10 is a cross-sectional view of FIG. 8, taken along the line N-N'.
FIG. 11 is a cross-sectional view of FIG. 6, taken along the line B-B'.
FIG. 12 is an enlarged view of section P in FIG. 11.
FIG. 13 is a cross-sectional view of FIG. 12, taken along the line Q-Q'.
FIG. 14 is a cross-sectional view of FIG. 12, taken along the line R-R'.
FIG. 15 is a cross-sectional view of FIG. 6, taken along the line C-C'.
FIG. 16 is an enlarged view of section D in FIG. 6.
FIG. 17 is an enlarged view of section E in FIG. 6.
FIGs. 18 and 19 are partial enlarged views of a main pipe of a container module of the present disclosure.
FIG. 20 is a diagram of the container module of FIG. 6 when viewed from a different direction.
FIG. 21 is an enlarged view of section F in FIG. 20.
FIG. 22 is an enlarged view of section G in FIG. 20.
FIG. 23 is a diagram showing a battery pack mounted in the container module of FIG. 6.
FIG. 24 is an enlarged view of section H in FIG. 23.
FIG. 25 is an enlarged view of section I in FIG. 23.
FIG. 26 is a diagram of the container module of FIG. 23 when viewed from a different direction.
FIG. 27 is an enlarged view of section J in FIG. 26.
FIG. 28 is an enlarged view of section K in FIG. 26.
FIG. 29 is a partial enlarged view of a main pipe of a container module of the present disclosure.
FIG. 30 is a diagram showing a container system of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure but not intended to be limiting, and thus it should be understood that a variety of other equivalents and modifications could have been made at the time the application was filed.

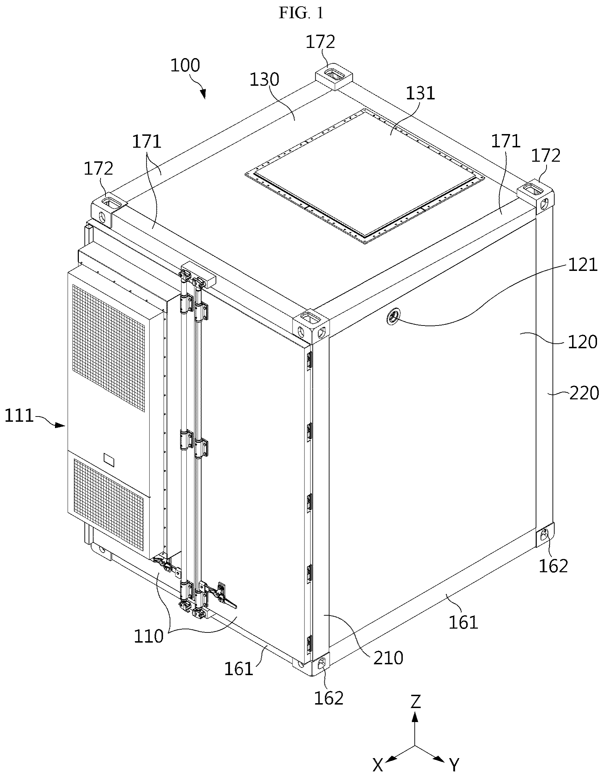

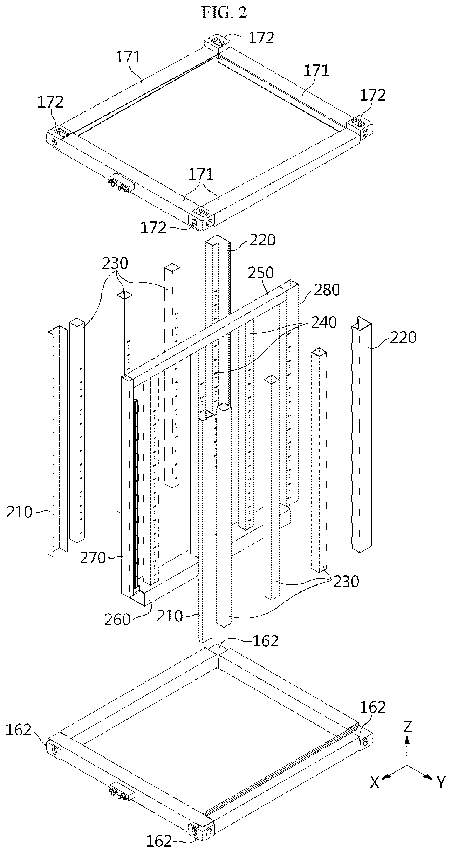

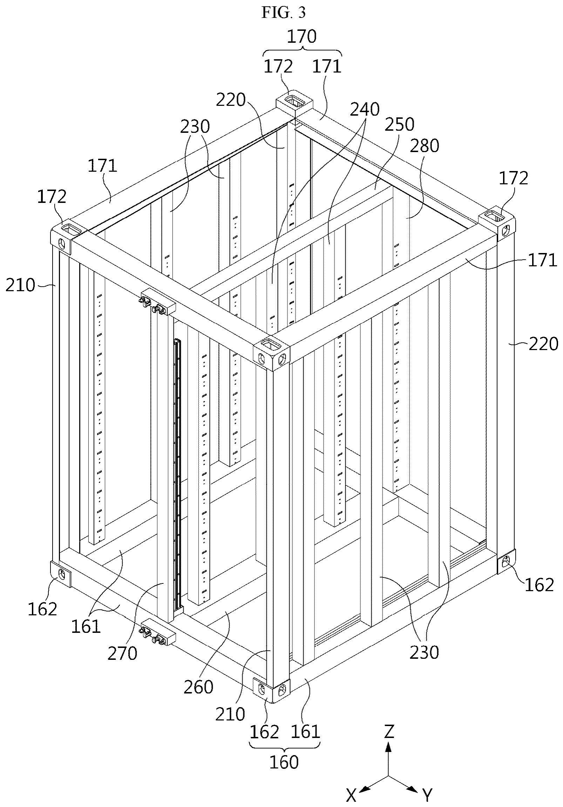

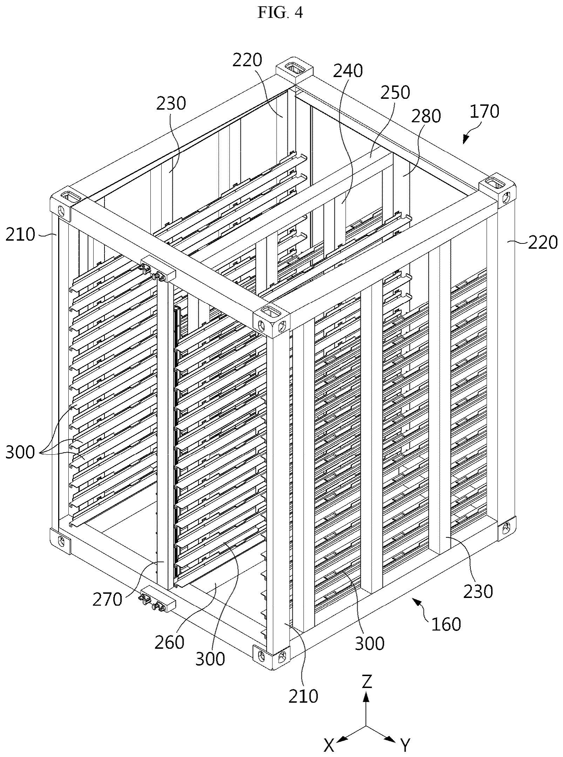

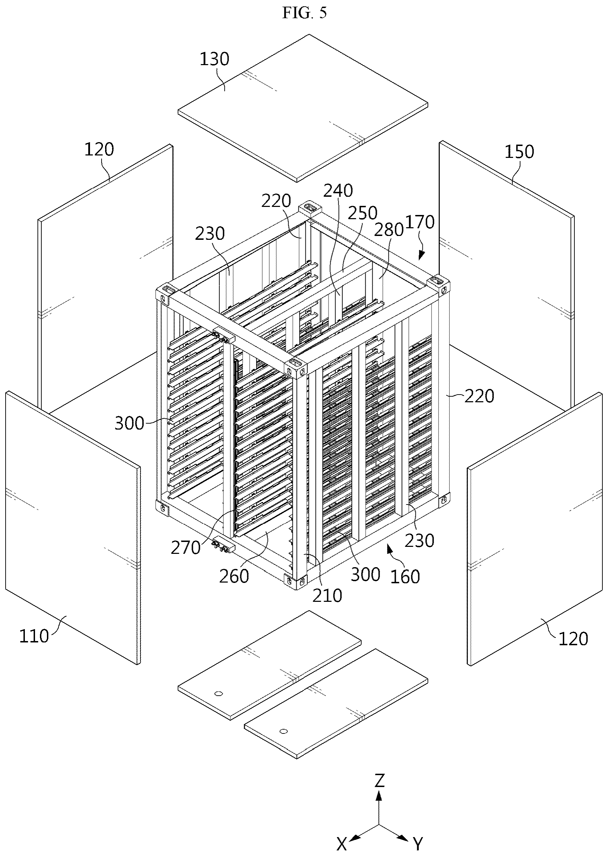

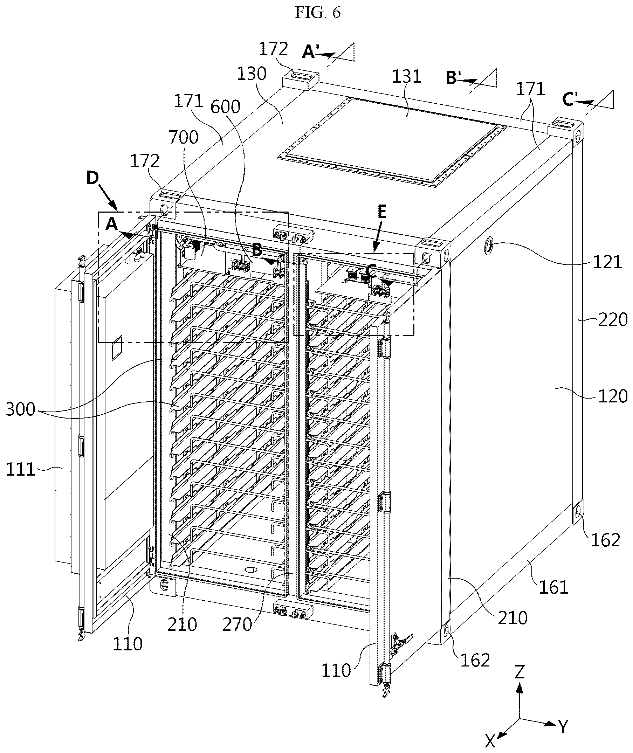

FIG. 1 is a diagram showing a container module according to an embodiment of the present disclosure. FIG. 2 is an exploded view of frames and columns of FIG. 1. FIG. 3 is an assembled diagram of the frames and the columns of FIG. 2. FIG. 4 is a diagram showing brackets installed at the columns of FIG. 3. FIG. 5 is a diagram showing panels installed at the frames and the columns of FIG. 4. FIG. 6 is a diagram showing an open front panel 110 of the container module of FIG. 1. Referring to FIGs. 1 to 6, the container module according to an embodiment of the present disclosure may include a base frame, a corner column, a bracket and a battery pack.

The base frame 160 may have a square or rectangular shape. The base frame 160 may include four horizontal beams 161 and four corner portions 162. The corner portion 162 may connect, fasten, fix or couple two horizontal beams 161.

Corner columns 210, 220 may include a front corner column 210 and a rear corner column 220. The front corner column 210 and the rear corner column 220 may be extended in the top-bottom direction or Z axis direction. The lower ends of the front corner column 210 and the rear corner column 220 may be connected, fastened, fixed or coupled to the corners of the base frame 160. Alternatively, the lower ends of the front corner column 210 and the rear corner column 220 may be connected, fastened, fixed or coupled to the corner portions 162. The front corner column 210 and the rear corner column 220 may form the exterior of the container module. Each of the front corner column 210 and the rear corner column 220 may include a pair of front corner columns and a pair of rear corner columns.

The bracket 300 may be coupled, fastened, fixed, attached or connected to the rear corner column 220. The bracket 300 may be extended in the front-rear direction or X axis direction. The bracket 300 may include a plurality of brackets.

The battery pack 400 may be located, installed, fastened, coupled or fixed on the bracket. The battery pack 400 may include a plurality of battery cells. In this instance, the battery cell may refer to a secondary battery. The battery pack 400 may include a plurality of battery packs. The battery pack 400 may have a rectangular parallelepiped shape.

By this configuration of the present disclosure, the container module may not have a rack frame for receiving the battery pack. The battery container generally adopts a structure in which a rack frame accommodates a plurality of battery packs and brackets are installed at the rack frame. In contrast, the present disclosure includes the brackets 300 directly installed at the rear corner column 220 that forms the exterior of the container module, thereby eliminating the need for the rack frame for installing the brackets 300. Accordingly, the structure of the container module may be simplified, and energy density may increase.

Referring to FIGs. 1 to 6, the container module according to an embodiment of the present disclosure may include a top frame. The top frame 170 may have a square or rectangular shape. The top frame 170 may include four horizontal beams 171 and four corner portions 172. The corner portion 172 may connect, fasten, fix or couple two horizontal beams 171.

The upper ends of the front corner column 210 and the rear corner column 220 may be connected, fastened, fixed or coupled to the corners of the top frame 170. Alternatively, the upper ends of the front corner column 210 and the rear corner column 220 may be connected, fastened, fixed or coupled to the corner portions 172.

The bracket 300 may be coupled, fastened, fixed, attached or connected to the rear corner column 220. The bracket 300 may be extended in the front-rear direction or X axis direction. The bracket 300 may include a plurality of brackets.

By this configuration of the present disclosure, the bracket 300 may be stably installed at the rear corner column 220.

Referring to FIGs. 1 to 6, the front corner column 210 and the rear corner column 220 of the container module according to an embodiment of the present disclosure may be exposed to the outside.

By this configuration of the present disclosure, because the brackets 300 are directly installed at the rear corner column 220 that forms the exterior of the container module, productivity of the container module may improve, and energy density may increase.

Referring to FIGs. 1 to 6, the container module according to an embodiment of the present disclosure may include a side column 230.

The side column 230 may be extended in the top-bottom direction or Z axis direction. The lower end of the side column 230 may be connected, fastened, fixed or coupled to the base frame 160. Alternatively, the lower end of the side column 230 may be connected, fastened, fixed or coupled to the horizontal beam 161. The side column 230 may include a plurality of side columns. The plurality of side columns 230 may be located between the front corner column 210 and the rear corner column 220.

The upper end of the side column 230 may be connected, fastened, fixed or coupled to the top frame 170. Alternatively, the upper end of the side column 230 may be connected, fastened, fixed or coupled to the horizontal beam 171.

By this configuration of the present disclosure, the side column 230 may stably support and connect the base frame 160 and the top frame 170. Accordingly, stiffness of the container module may improve.

Referring to FIGs. 1 to 6, the container module according to an embodiment of the present disclosure may include a side panel 120. The side panel 120 may be extended in the top-bottom direction or Z axis direction. The side panel 120 may form the exterior of the container module. Additionally, the side panel 120 may be exposed to the outside.

The side panel 120 may cover the side column 230. Additionally, the side column 230 may support the side panel 120. Alternatively, the side column 230 may contact the inner surface of the side panel 120.

By this configuration of the present disclosure, the side column 230 may support the side panel 120 and be coupled to the bracket 300. Accordingly, the structure of the container module may be simplified, and energy density may improve.

Referring to FIGs. 1 to 6, the container module according to an embodiment of the present disclosure may include a front panel 110, a pair of side panels 120, a top panel 130, a bottom panel 140 and a rear panel 150. The front panel 110, the pair of side panels 120, the top panel 130, the bottom panel 140, the rear panel 150, the front corner column 210, the rear corner column 220, the top frame 170 and the base frame 160 may be referred collectively to as a case 100.

The case 100 may provide an internal space. The case 100 may have a rectangular parallelepiped shape. The case 100 may the exterior of the container module.

The front panel 110 may be configured to be open or closed. The front panel 110 may include a pair of panels. The pair of front panels 110 may include a hinge. The pair of front panels 110 may rotate to close the case 100.

A front column 270 may support the pair of front panels 110. The front column 270 may be extended in the top-bottom direction. Additionally, the upper and lower ends of the front column 270 may be fixed, fastened or coupled to the top frame 170 and the base frame 160, respectively. When the pair of front panels 110 are in the closed state, the front column 270 may contact or support the pair of front panels 110.

The front panel 110 may include a cooling portion 111. For example, the cooling portion 111 may be a heat exchanger such as heating, ventilation & air conditioning (HVAC), a chiller, a cooler, etc. The cooling portion 111 may adjust the temperature of a cooling fluid flowing in the case 100. The cooling portion 111 may supply or circulate the cooling liquid or cooling gas into the case 100 through a pipe.

A rear column 280 may support the rear panel 150. Alternatively, the rear panel 150 may cover the rear column 280. The rear column 280 may be extended in the top-bottom direction. Additionally, the upper end and the lower end of the rear column 280 may be fixed, fastened or coupled to the top frame 170 and the base frame 160, respectively. Additionally, the upper end and the lower end of the rear column 280 may be fixed, fastened or coupled to the horizontal beams 161, 171, respectively.

Referring to FIGs. 1 to 6, the container module of the present disclosure may include a venting portion 131. The top panel 130 may include the venting portion 131. The venting portion 131 may bring the inside and outside of the case 100 into communication with each other when a thermal event occurs. When the thermal event occurs, gases may be vented from the battery pack 400, and the pressure in the case 100 may rise. In this instance, the venting portion 131 may force the venting gases out of the case 100. Accordingly, the pressure in the case 100 may be lowered.

Referring to FIGs. 1 to 6, the container module according to an embodiment of the present disclosure may include a base bar 260. The base bar 260 may be extended in the front-rear direction or X axis direction. The base bar 260 may be connected, coupled, fastened or fixed to the pair of horizontal beams 161 of which the front side and the rear side are located opposite each other. The base bar 260 may be located at the central area inside the case 100.

A top bar 250 may be extended in the front-rear direction or X axis direction. The top bar 250 may be connected, coupled, fastened or fixed to the pair of horizontal beams 171 of which the front side and the rear side are located opposite each other. The top bar 250 may be located at the central area inside the case 100. The base bar 260 and the top bar 250 may be located opposite each other.

A center column 240 may be extended in the top-bottom direction or Z axis direction. The lower end of the center column 240 may be connect, fasten, fix or coupled to the base bar 260. The center column 240 may include a plurality of center columns. The plurality of center columns 240 may be located between the front column 270 and the rear column 280. The upper end of the center column 240 may be connected, fastened, fixed or coupled to the top bar 250.

Referring to FIGs. 1 to 6, the plurality of brackets 300 may be coupled, fastened or fixed to the right side of the plurality of side columns 230 arranged along the left side panel 120. Additionally, the plurality of brackets 300 may be coupled, fastened or fixed to the left side of the plurality of side columns 230 arranged along the right side panel 120. Additionally, the plurality of brackets 300 may be coupled, fastened or fixed to each of the left side and the right side of the center column 240 arranged along the central area. The plurality of columns 220, 230, 240, 280 and the plurality of brackets 300 may define a space for mounting the battery pack 400. The plurality of brackets 300 may support or fix the battery pack 400.

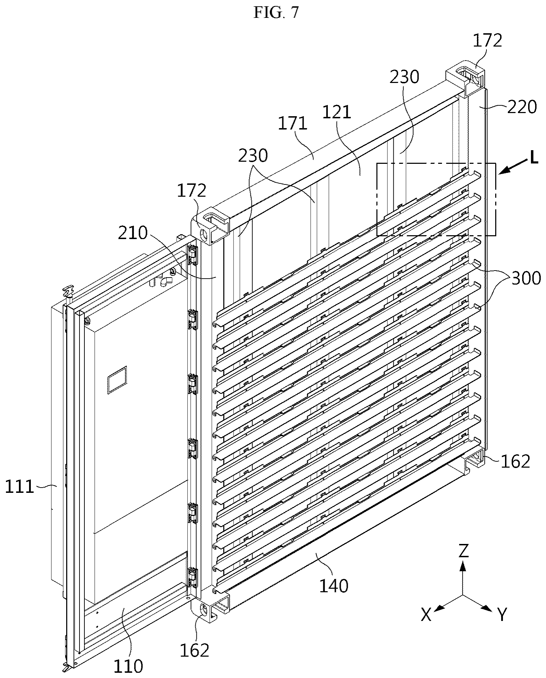

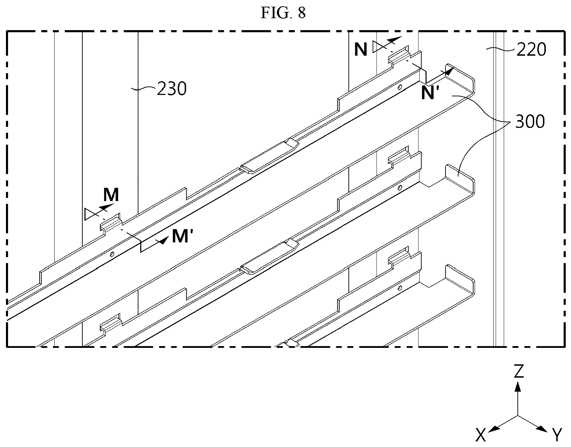

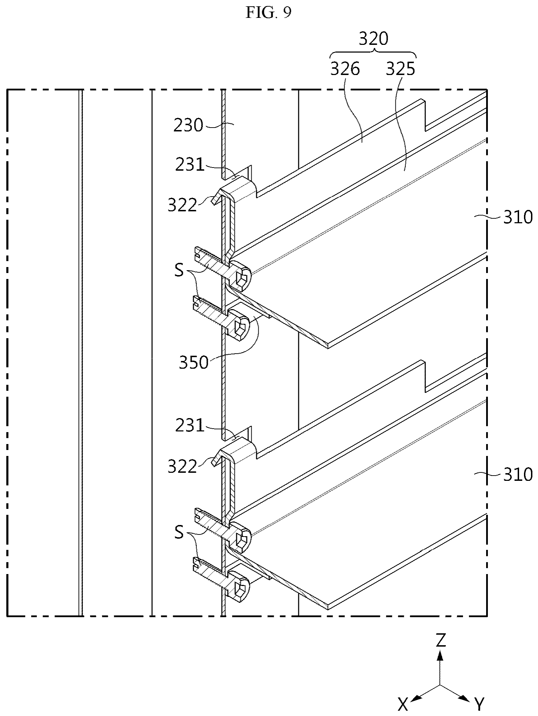

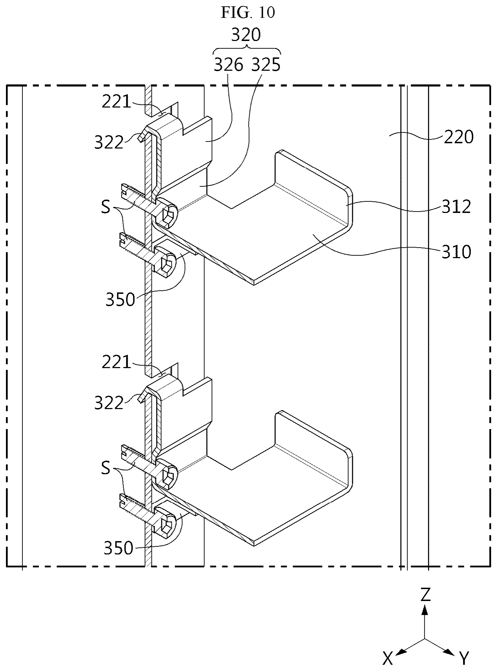

FIG. 7 is a cross-sectional view of FIG. 6, taken along the line A-A'. FIG. 8 is an enlarged view of section L in FIG. 7. FIG. 9 is a cross-sectional view of FIG. 8, taken along the line M-M'. FIG. 10 is a cross-sectional view of FIG. 8, taken along the line N-N'.

Referring to FIGs. 7 to 10, the container module according to an embodiment of the present disclosure may include a fastening member S to fasten the rear corner column 220 to the bracket 300.

The bracket 300 may include a horizontal portion 310, a vertical portion 320 and a support 350.

The horizontal portion 310 may be extended in the front-rear direction or Y axis direction. The horizontal portion 310 may have a stopper 312 at the rear end. The stopper 312 may be formed by bending up a part of the horizontal portion 310. The horizontal portion 310 and the stopper 312 may be integrally formed. The horizontal portion 310 may include a first fixing portion at the front side. The first fixing portion may be formed by bending down a part of the horizontal portion 310. The first fixing portion and the stopper 312 may be integrally formed. The first fixing portion may include a through-hole formed in the front-rear direction.

The vertical portion 320 may be extended in the front-rear direction or Y axis direction. The vertical portion 320 may be extended up from the horizontal portion 310. The vertical portion 320 may be formed by bending a part of the horizontal portion 310. The vertical portion 320 and the horizontal portion 310 may be formed at an angle of approximately 90. The vertical portion 320 and the horizontal portion 310 may be integrally formed. Additionally, the vertical portion 320 may be extended up with a step.

The vertical portion 320 may include a first part 325 and a second part 326. The first part 325 may be extended up from the horizontal portion 310. The second part 326 may be extended from the first part 325. Each of the first part 325 and the second part 326 may be extended along the front-rear direction or Y axis direction. The first part 325 and the second part 326 may be stepped. The second part 326 may be stepped in the inward direction from the first part 325 or in a direction in which the horizontal portion 310 is formed. The second part 326 may be formed by bending up a part of the first part 325. The first part 325 and the second part 326 may be integrally formed.

The support 350 may be extended along the front-rear direction or Y axis direction. The support 350 may be coupled, fixed or attached to the lower surface of the horizontal portion 310. For example, the support 350 may be coupled to the lower surface of the horizontal portion 310 by welding. The support 350 may support the load applied to the bracket 300.

The fastening member S may fasten or couple the first part 325 to the rear corner column 220. Additionally, the fastening member S may fasten or couple the support 350 and the rear corner column 220.

The rear corner column 220 may have a stopper hole 221. A hook 322 of the bracket 300 may be inserted into the stopper hole 221.

By this configuration of the present disclosure, because the bracket 300 is directly installed at the rear corner column 220 that forms the exterior of the container module, the structure of the container module may be simplified, and energy density may increase.

Referring to FIGs. 7 to 10, the bracket 300 of the container module according to an embodiment of the present disclosure may be coupled to the side column 230.

The fastening member S may fasten or couple the first part 325 to the side column 230. Additionally, the fastening member S may fasten or couple the support 350 to the side column 230.

The side column 230 may have a stopper hole 231. The hook 322 of the bracket 300 may be inserted into the stopper hole 231.

By this configuration of the present disclosure, because the bracket 300 is directly installed at the side column 230, the structure of the container module may be simplified, and energy density may increase.

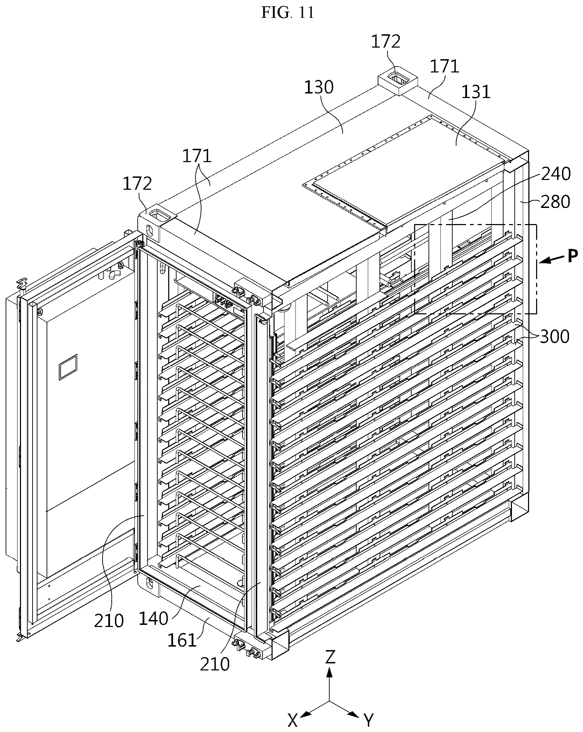

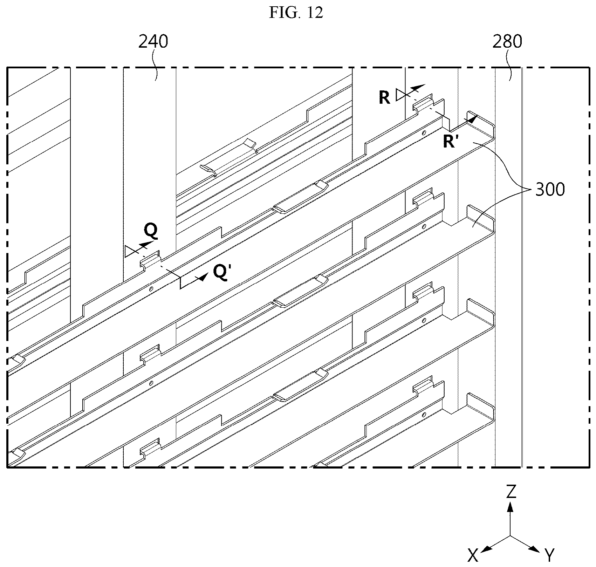

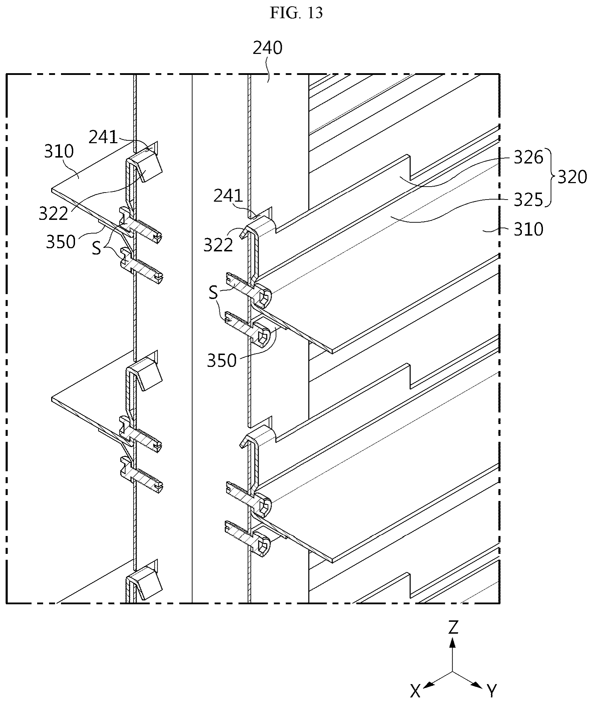

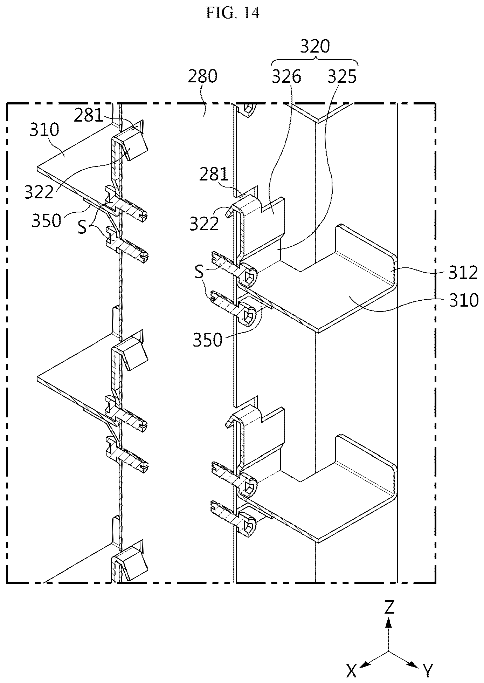

FIG. 11 is a cross-sectional view of FIG. 6, taken along the line B-B'. FIG. 12 is an enlarged view of section P in FIG. 11. FIG. 13 is a cross-sectional view of FIG. 12, taken along the line Q-Q'. FIG. 14 is a cross-sectional view of FIG. 12, taken along the line R-R'.

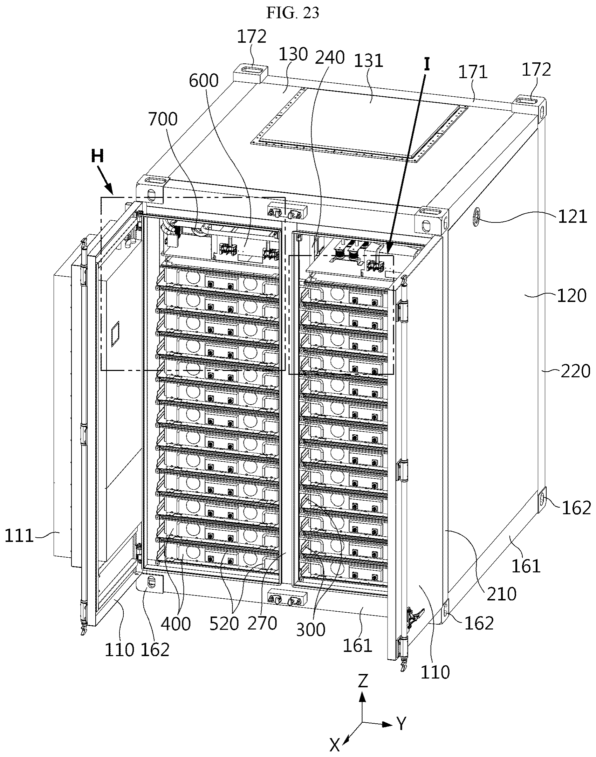

Referring to FIGs. 11 to 14, the battery pack 400 (see FIG. 23) of the container module according to an embodiment of the present disclosure may be located between the rear corner column 220 and the center column 240. Additionally, the battery pack 400 may be located between the rear corner column 220 and the rear column 280.

The fastening member S may fasten or couple the first part 325 to the center column 240. Additionally, the fastening member S may fasten or couple the support 350 to the center column 240.

The center column 240 may have a stopper hole 241. The hook 322 of the bracket 300 may be inserted into the stopper hole 241.

The fastening member S may fasten or couple the first part 325 to the rear column 280. Additionally, the fastening member S may fasten or couple the support 350 to the rear column 280.

The rear column 280 may have a stopper hole 281. The hook 322 of the bracket 300 may be inserted into the stopper hole 281.

By this configuration of the present disclosure, the bracket 300 may be directly installed at the center column 240 and the rear column 280. Additionally, the rear column 280 may support the rear panel 150 and support the battery pack. Accordingly, the structure of the container module may be simplified, and energy density may increase.

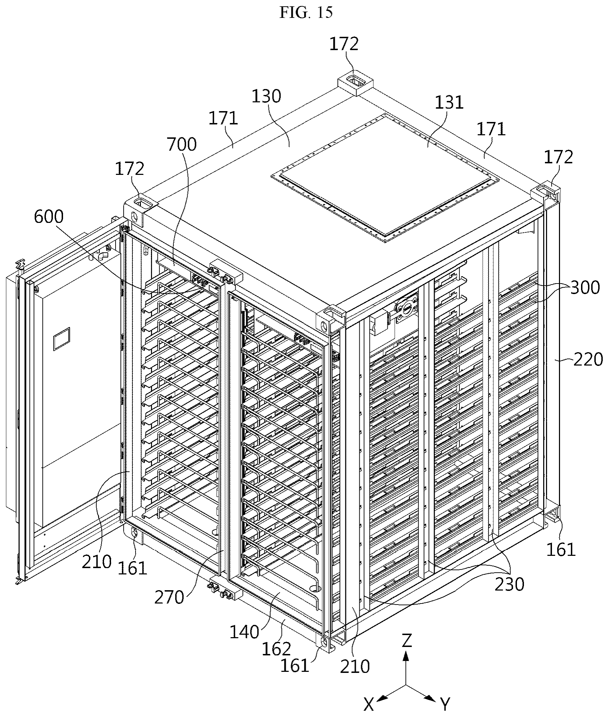

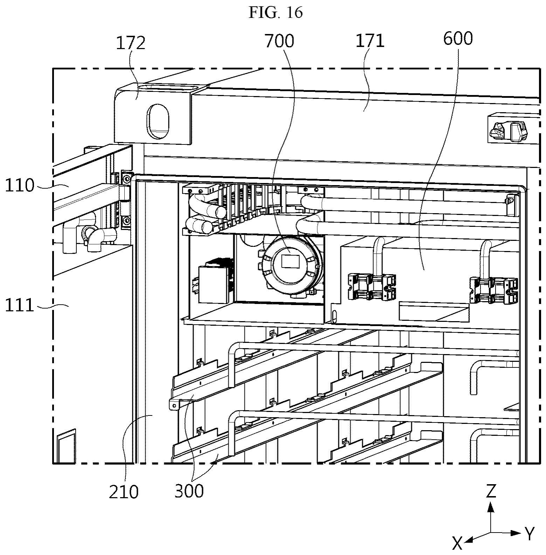

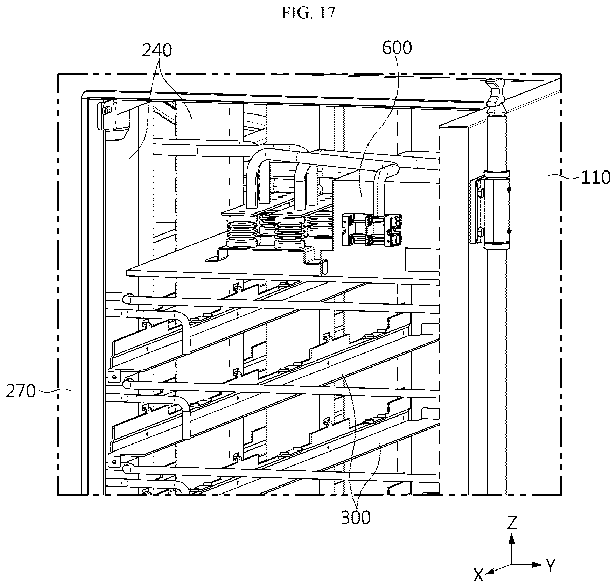

FIG. 15 is a cross-sectional view of FIG. 6, taken along the line C-C'. FIG. 16 is an enlarged view of section D in FIG. 6. FIG. 17 is an enlarged view of section E in FIG. 6.

Referring to FIGs. 15 to 17, the container module according to an embodiment of the present disclosure may include a control unit 600 and a sensor unit 700. The control unit 600 may be electrically and physically connected to the plurality of battery packs 400. The control unit 600 may include a pair of control units. The control unit 600 may be located on each of the left side and the right side. The control unit 600 may control the charge and discharge and on-off of the plurality of battery packs 400. The sensor unit 700 may detect the state of charge and discharge, temperature and pressure of the plurality of battery packs 400. Additionally, the sensor unit 700 may detect the temperature, pressure and humidity in the case 100. The sensor unit 700 may transmit the acquired information to the control unit 600. The control unit 600 and the sensor unit 700 may be located at the upper part inside of the case 100. The control unit 600 and the sensor unit 700 may be located at higher position than the plurality of brackets 300.

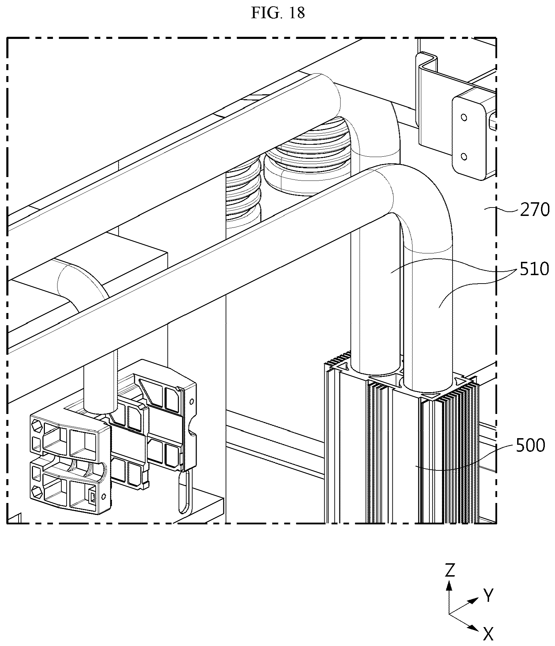

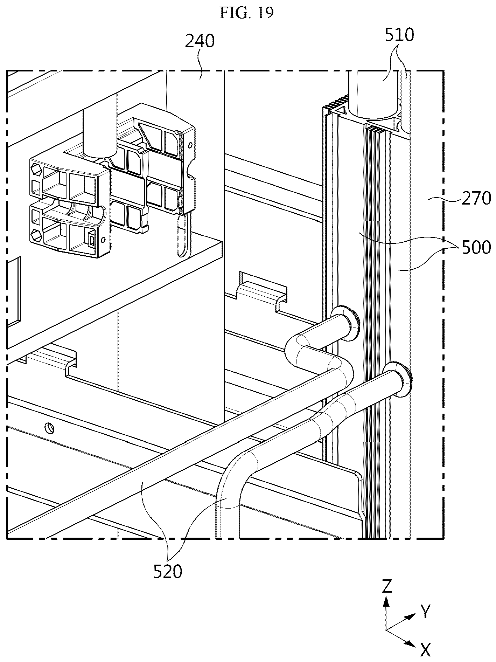

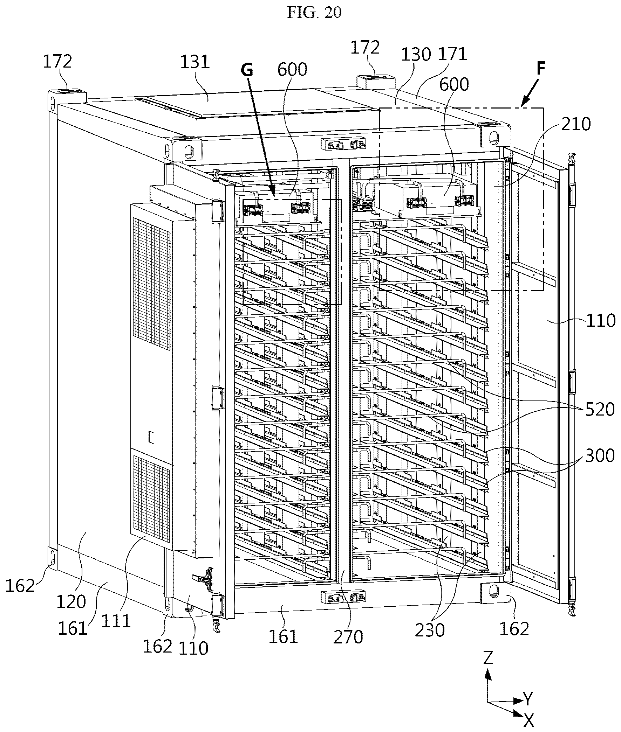

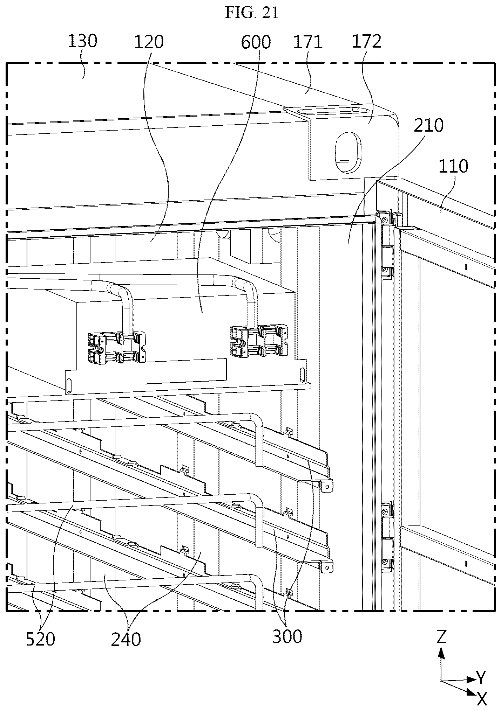

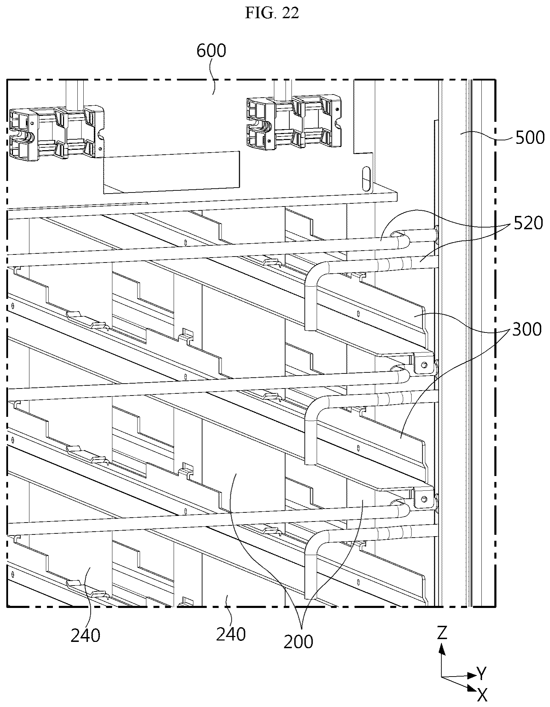

FIGs. 18 and 19 are partial enlarged views of a main pipe 500 of the container module of the present disclosure. FIG. 20 is a diagram of the container module of FIG. 6 when viewed from a different direction. FIG. 21 is an enlarged view of section F in FIG. 20. FIG. 22 is an enlarged view of section G in FIG. 20. Referring to FIGs. 18 to 22, the container module according to an embodiment of the present disclosure may include the main pipe 500. The main pipe 500 may be extended in the top-bottom direction or Z axis direction. The main pipe 500 may be fastened, fixed or coupled to the inside of the case 100. The main pipe 500 may be located between the center column 240 and the front column 270. Additionally, the main pipe 500 may be located at the rear of the front column 270. Additionally, the main pipe 500 may be located at the front position of the central area of the internal space of the case 100. Additionally, the main pipe 500 may be located between the battery packs 400 arranged in the left-right direction.

The main pipe 500 may include a flow channel inside. The main pipe 500 may include a pair of flow channels. The pair of flow channels may include a flow channel through which the cooling fluid is fed and a flow channel through which the cooling fluid exits. Additionally, the main pipe 500 may be in communication with a first pipe 510. The first pipe 510 may include a pair of first pipes. The first pipe 510 may bring the main pipe 500 and the cooling portion 111 into communication with each other.

The main pipe 500 may be in communication with a second pipe 520. The second pipe 520 may include a pair of second pipes. The second pipe 520 may bring the main pipe 500 and the battery pack 400 into communication with each other. The second pipe 520 may include pairs of second pipes. Each of the pairs of second pipes 520 may be in communication with the battery pack 400. The pairs of second pipes 520 may be in communication with each of the left side and the right side of the main pipe 500.

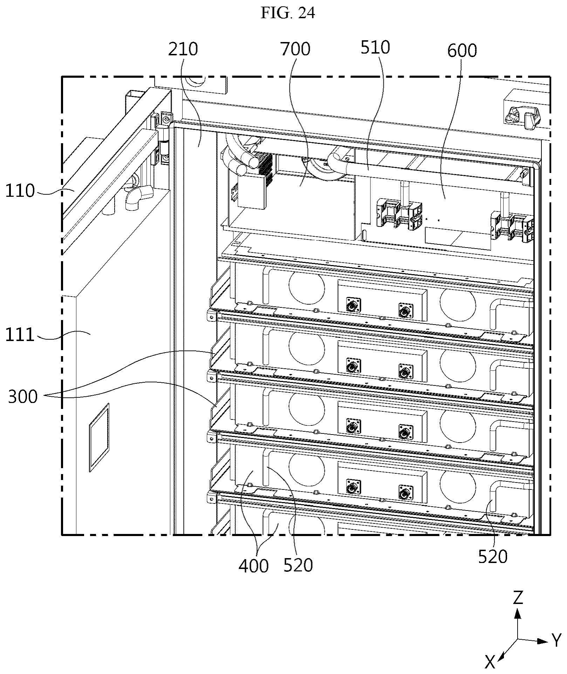

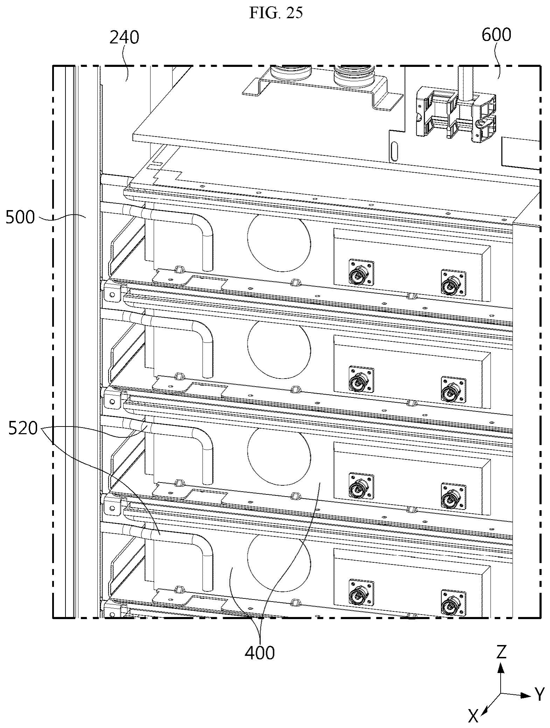

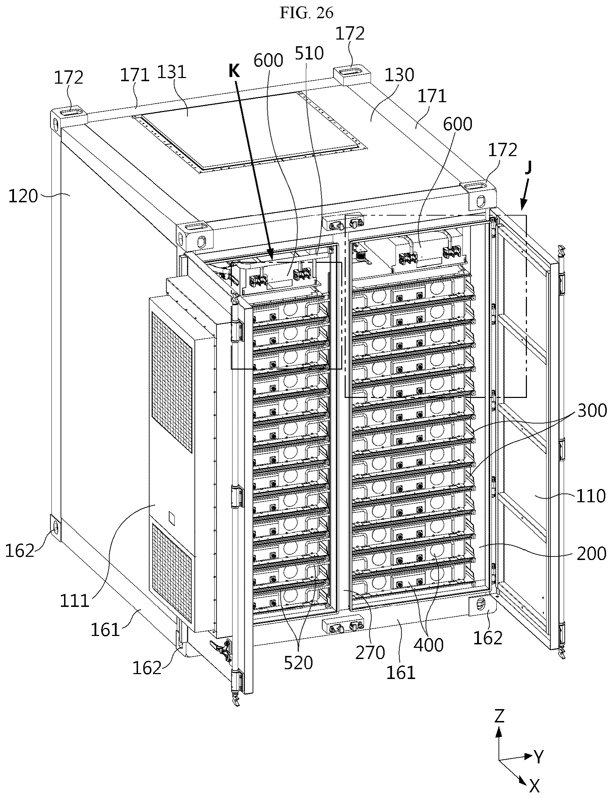

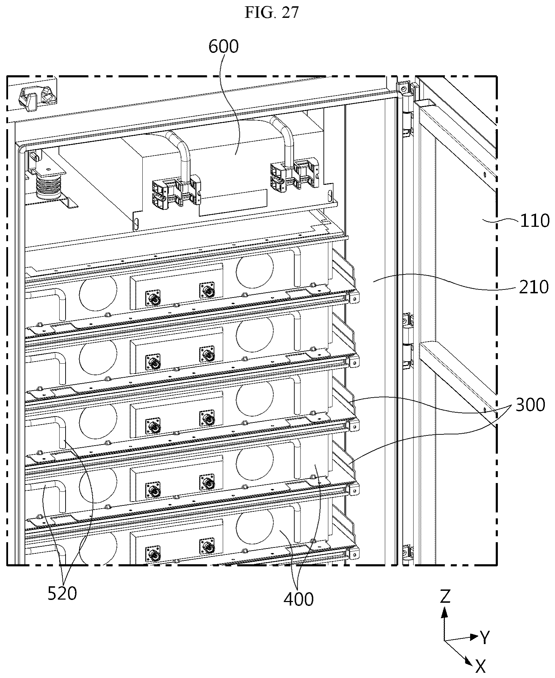

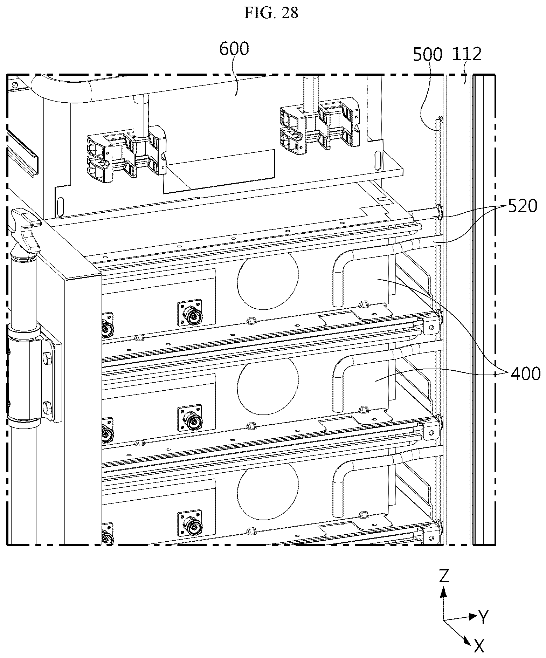

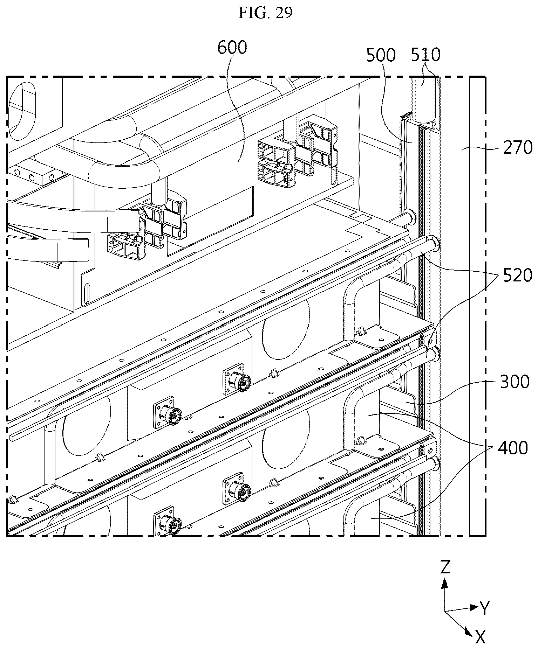

FIG. 23 is a diagram showing the battery pack 400 mounted in the container module of FIG. 6. FIG. 24 is an enlarged view of section H in FIG. 23. FIG. 25 is an enlarged view of section I in FIG. 23. FIG. 26 is a diagram of the container module of FIG. 23 when viewed from a different direction. FIG. 27 is an enlarged view of section J in FIG. 26. FIG. 28 is an enlarged view of section K in FIG. 26. FIG. 29 is a partial enlarged view of the main pipe 500 of the container module of the present disclosure.

Referring to FIGs. 23 to 29, the container module according to an embodiment of the present disclosure may include a battery array. The plurality of battery packs 400 may be arranged in the top-bottom direction or Z axis direction to form the battery array. Additionally, the container module may include two battery arrays. The two battery arrays may be arranged in the left-right direction or Y axis direction. The battery array may refer collectively to the plurality of battery packs 400. The plurality of battery packs 400 that form the battery array may be spaced apart from each other.

The left battery array may be located between the columns 210, 230, 220 arranged along the left side panel 120 and the columns 270, 240, 270 arranged at the central area. The right battery array may be located between the columns 210, 230, 220 arranged along the right side panel 120 and the columns 270, 240, 270 arranged at the central area.

Each battery pack 400 may be mounted, coupled, fastened or fixed to the pair of brackets 300. The control unit 600 and the sensor unit 700 may be located on the battery array. The columns 220, 230, 240, 280 or the brackets 300 may support the battery pack 400 or the battery array. The main pipe 500 may be located between the pair of battery arrays.

By this configuration of the present disclosure, because the container module does not have the rack frame, internal space utilization of the case 100 may increase. Accordingly, energy capacity and energy density of the container module may improve.

The pair of second pipes 520 may be in communication with the battery pack 400. The cooling fluid may be supplied to the battery pack 400 through the second pipe 520, and the cooling fluid having passed through the battery pack 400 may flow out through the second pipe 520.

The main pipe 500 may be located between the front column 270 and the center column 240.

By this configuration of the present disclosure, the container module may be formed in compact size. Accordingly, the plurality of battery arrays may be mounted in the case 100.

Referring to FIGs. 23 to 29, the center column 240 of the container module according to an embodiment of the present disclosure may be located between the left battery array and the right battery array. Alternatively, the center column 240 may be located between the first battery pack 400 included in the left battery array and the second battery pack 400 included in the right battery array.

The main pipe 500 may be located between the left battery array and the right battery array. Alternatively, the main pipe 500 may be located between the first battery pack 400 included in the left battery array and the second battery pack 400 included in the right battery array.

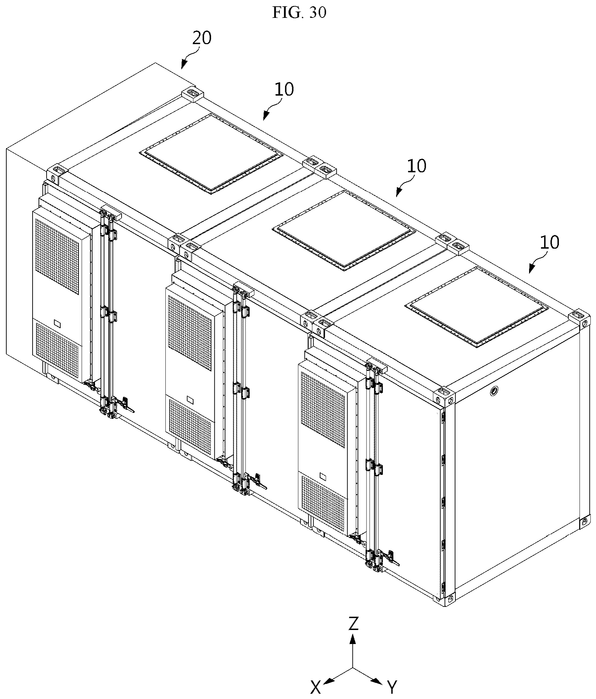

FIG. 30 is a diagram showing a container system of the present disclosure. Referring to FIGs. 1 and 20, the container system may include a plurality of container modules 10. The plurality of container modules 10 may be physically or electrically connected to each other. The container module 10 may have a connection hole 121 in the side panel 120. A cable electrically connecting the plurality of container modules 10 may pass through the connection hole 121.

The case 100 may be configured to be stacked or coupled with the case 100 of the other container module 10. The case 100 may have the corner portions 162, 172 in the side panel 120. The corner portions 162, 172 may be disposed in each of the left side panel 120 and the right side panel 120 of the case 100. Additionally, the corner portions 162, 172 may be disposed in each of the upper part and the lower part of the side panel 120. Additionally, the corner portions 162, 172 may be disposed at each corner of the side panel 120. The case 100 may be connected, coupled, fastened, stacked or fixed to the case 100 of the other container module along the left-right direction or Y axis direction.

The container system may include a control module 20. The control module 20 may be fastened, coupled, connected, stacked or fixed to the side panel 120 of the container module 10 or the corner portions 162, 172.

The control module 20 may be electrically connected to the plurality of container modules 10 included in the container system. The control module 20 may control the charge and discharge of the plurality of container modules 10. Additionally, the control module 20 may acquire state information of the plurality of container modules 10.

The container system may further include a fire fighting module to control thermal events.

An energy storage system (ESS) according to the present disclosure may include the container module 10 according to the present disclosure. The energy storage system may include a plurality of container systems. Additionally, the container system may include a plurality of container modules 10. The energy storage system may include a predetermined number of container modules 10 combined with the control module 20 to form a link group.

The terms indicating directions such as upper, lower, left, right, front and rear are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A container module comprising:
a base frame having a square or rectangular shape;
a corner column extended in a top-bottom direction, and connected to a corner of the base frame;
a bracket coupled to the corner column, and extended in a front-rear direction; and
a battery pack installed on the bracket.

2. The container module according to claim 1, further comprising:
a top frame located on the base frame, and having a square or rectangular shape,
wherein the corner column is connected to the corner of the top frame.

3. The container module according to claim 1, wherein the corner column is exposed to outside.

4. The container module according to claim 1, further comprising:
a fastening member configured to fasten the corner column to the bracket.

5. The container module according to claim 1, wherein the base frame includes a horizontal beam connected to the corner, and
wherein the container module further includes a side column connected in the top-bottom direction, and connected to the horizontal beam.

6. The container module according to claim 5, wherein the bracket is coupled to the side column.

7. The container module according to claim 5, further comprising:
a side panel extended in the top-bottom direction, and configured to cover the side column,
wherein the side column supports the side panel.

8. The container module according to claim 1, further comprising:
a center column extended in the top-bottom direction, and located at a center of a width of the base frame in the left-right direction,
wherein the battery pack is located between the corner column and the center column.

9. The container module according to claim 8, wherein the battery pack is a first battery pack,
wherein the container module further includes a second battery pack arranged in the left-right direction with the first battery pack, and
wherein the center column is located between the first battery pack and the second battery pack.

10. The container module according to claim 9, further comprising:
a main pipe extended in the top-bottom direction and located between the first battery pack and the second battery pack, and having a flow channel.

11. The container module according to claim 10, wherein the main pipe is in communication with the first battery pack and the second battery pack.

12. The container module according to claim 10, further comprising:
a front panel configured to be open and closed; and
a cooling portion disposed in the front panel,
wherein the main pipe is in communication with the cooling portion.

13. The container module according to claim 2, further comprising:
a top panel coupled to the top frame; and
a venting portion disposed in the top panel.

14. The container module according to claim 13, wherein the venting portion is configured to bring inside and outside of the top panel into communication with each other when a thermal event occurs.

15. A container system comprising a plurality of container modules according to any one of claims 1 to 14.

16. The container system according to claim 15, wherein the plurality of container modules is coupled in the left-right direction.

17. The container system according to claim 15, further comprising:
a control module coupled to a side of one container module of the plurality of container modules.

18. An energy storage system comprising the container module according to any one of claims 1 to 14.
